# FASCICULE DE BREVET EUROPEEN

(11) **EP 0 870 658 B1**
(45) Date de publication et mention de la délivrance du brevet: **14.08.2002**
(21) Numéro de dépôt: 98400781.5
(22) Date de dépôt: 02.04.1998
(51) Int. Cl.: B60S 5/04

(54) **Dispositif de gonflage mettant en oeuvre une bouteille ou cartouche de gaz comprimé**
Aufpumpeinrichtung die eine Druckgaskartusche oder -flasche verwendet
Inflating device using a bottle or cartridge of compressed gas

(30) Priorité: 07.04.1997 FR 9704215
(43) Date de publication de la demande: 14.10.1998
(73) Titulaire: ZEFAL, 45150 Jargeau (FR)
(72) Inventeur: Glotin, Joel, 91330 Yerres (FR)
(74) Mandataire: CABINET BONNET-THIRION

(56) Documents cités:
- DE-A- 3 205 264
- DE-A- 3 711 583
- DE-A- 4 324 220
- DE-C- 4 120 188
- FR-A- 2 653 523

## Description

La présente invention concerne un dispositif de gonflage.

Un tel dispositif de gonflage peut être utilisé pour le gonflage d'un pneumatique, par exemple, ou analogue, muni d'une valve de gonflage.

La présente invention a pour but de proposer un dispositif de gonflage mettant en oeuvre une bouteille ou cartouche de gaz comprimé qui soit de faible encombrement, léger, facile à réaliser et, dès lors, dont l'industrialisation est peu coûteuse.

Le dispositif de gonflage selon l'invention est facile à transporter et, s'agissant d'un dispositif adapté au gonflage d'un pneumatique d'un véhicule à deux roues, en particulier dont la roue arrière est actionnée par des pédales, if peut être mis dans une poche.

Le dispositif de gonflage selon l'invention, mettant en oeuvre une bouteille ou cartouche de gaz comprimé, est du genre comportant un alésage d'alimentation fileté intérieurement destiné à recevoir par vissage le goulot de ladite bouteille ou cartouche fermé par une capsule, et au fond duquel est prévu un perforateur entouré d'un joint dit d'alimentation, ledit alésage d'alimentation communiquant par un trou axial avec un alésage de distribution, ladite communication étant contrôlée par un clapet commandé porté par un distributeur déplaçable axialement, ledit dispositif comportant également une cavité destinée à recevoir à étanchéité la valve de gonflage du pneumatique ou analogue et communiquant avec l'alésage de distribution, dispositif dans lequel ladite étanchéité est assurée par un joint dit de valve, placé dans ladite cavité dans laquelle il est maintenu par un couvercle muni d'un passage pour la valve de pneumatique ou analogue.

Un tel dispositif est notamment décrit dans le document FR-U-2 653 523.

Selon l'invention, un dispositif tel que ci-dessus est caractérisé par le fait que le joint de valve est constitué de deux parties de révolution coaxiales, une partie intérieure et une partie extérieure, raccordées par une partie annulaire transversale tournée vers l'extérieur, un passage étant prévu pour mettre en communication l'alésage de distribution et l'espace compris entre les deux parties de révolution coaxiales dudit joint de valve, en vue de plaquer, d'une part, la partie intérieure contre le corps de la valve du pneumatique et, d'autre part, la partie extérieure contre la paroi intérieure de la cavité, en assurant ainsi une étanchéité parfaite entre la valve du pneumatique et le dispositif.

Avantageusement, ladite partie intérieure du joint de valve présente un rebord annulaire dirigé vers l'intérieur et définissant un passage central par lequel ladite cavité et l'alésage de distribution communiquent.

De préférence, le joint d'alimentation comprend une jupe cylindrique prolongée, d'un côté, par un rebord annulaire et, de l'autre côté, par une lèvre tronconique orientée vers l'axe de la jupe cylindrique ; la section de la lèvre tronconique décroît légèrement depuis la jupe cylindrique vers son extrémité proche de l'axe.

Avantageusement, le perforateur comprend un socle surmonté d'une aiguille creuse, une gorge ménagée à la périphérie du perforateur étant prévue pour recevoir le rebord annulaire du joint d'alimentation ; l'aiguille creuse est située entièrement à l'intérieur du joint d'alimentation qui l'entoure.

Avantageusement, le clapet présente une tête de forme générale conique adaptée à coopérer à étanchéité avec une portée tronconique qui borde un trou axial traversant une cloison de séparation séparant l'alésage d'alimentation et l'alésage de distribution.

De préférence, la tête du clapet est portée par une queue dans laquelle est ménagé un trou borgne axial et une saignée diamétrale en sorte que sont réalisées deux pattes élastiques munies chacune d'une gorge semi-cylindrique pour la fixation par encliquetage du clapet en bout du distributeur ; le montage par encliquetage du clapet en bout du distributeur est réalisé avec un jeu tant axial que radial.

Selon une forme de réalisation, ledit dispositif comporte un corps supportant le joint d'alimentation et le distributeur, lequel distributeur qui porte le clapet porte également le joint de valve, le joint d'alimentation, le clapet et le joint de valve étant alignés selon l'axe du corps.

Selon une autre forme de réalisation, ledit dispositif comporte un corps en deux parties, une première partie supportant selon un axe le joint de valve et une deuxième partie supportant selon un axe le joint d'alimentation et le distributeur, lesdits axes faisant un angle entre eux.

De préférence, lesdits axes sont orthogonaux.

Avantageusement, lesdits axes ne sont pas coplanaires, la première partie du corps portant un poussoir, s'étendant selon son axe, pour mettre en communication, à volonté, l'alésage de distribution avec l'extérieur et/ou un manomètre.

De préférence, le perforateur est monté coulissant dans le corps.

Pour mieux faire comprendre l'objet de l'invention, on va en décrire maintenant, à titre d'exemple, purement illustratif et non limitatif, des modes de réalisation représentés sur les dessins annexés.

Sur ces dessins :
- la figure 1 est une vue en coupe, de l'appareil de gonflage conforme à l'invention, selon I-I de la figure 2 ;
- la figure 2 est une vue en coupe selon II-II de la figure 1 ;
- la figure 3 est une vue selon la flèche III de la figurer 1;
- la figure 4 est une vue analogue à la figure 1, le poussoir du dispositif étant dans une autre position ;
- les figures 5 et 6 sont des vues en coupe montrant les joints, respectivement d'alimentation et de valve ;
- la figure 7 est une vue partielle analogue à la figure 2, le dispositif étant équipé d'une bouteille de gaz comprimé ;
- la figure 8 est une vue partielle à plus grande échelle de la zone VIII de la figure 2 ;
- la figure 9 est une vue en coupe montrant une variante de dispositif de gonflage selon l'invention.

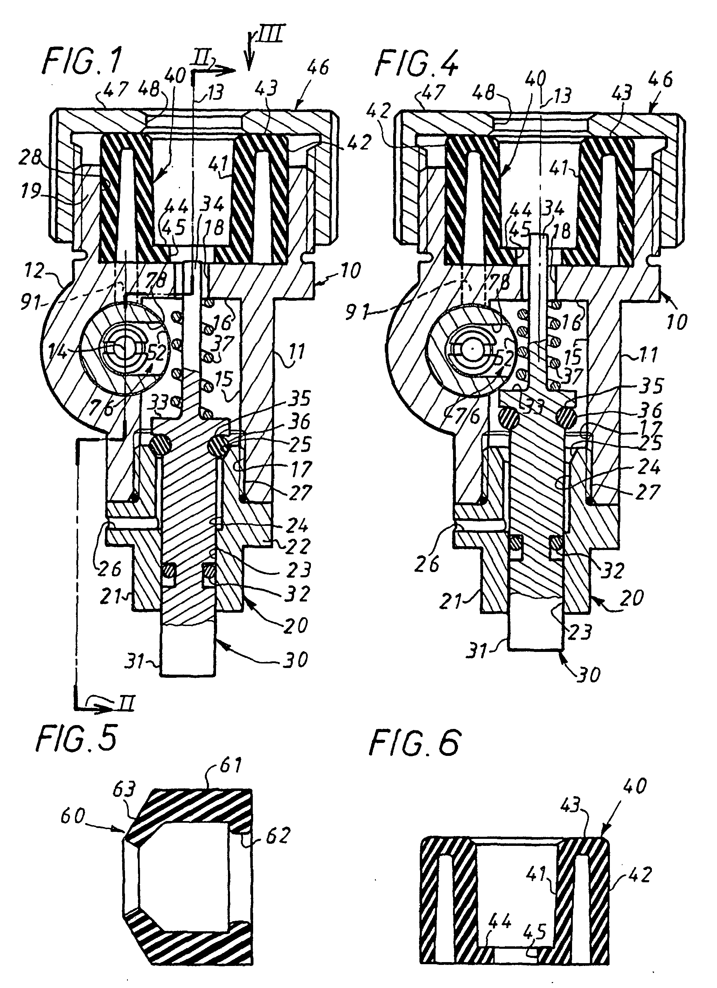

Le dispositif de gonflage illustré par les figures 1 à 8 comprend un corps 10 constitué d'une première partie 11, d'axe 13 dit premier axe, et une deuxième partie 12, d'axe 14 dit second axe.

La première partie 11 présente, figure 1, intérieurement un alésage 15 cylindrique d'axe 13 ; l'alésage 15, d'un côté, débouche à l'extérieur et, de l'autre côté, est limité par une cloison transversale 16.

La paroi intérieure de l'extrémité ouverte vers l'extérieur de l'alésage 15 porte un filet intérieur 17 avec lequel est adapté à coopérer à étanchéité un filetage extérieur que présente une extrémité 27 d'un bouchon 20 dite extrémité filetée.

Le bouchon 20 présente une queue 21 ayant un diamètre voisin de celui de l'extrémité filetée 27 et séparée de celle-ci par une collerette 22 de plus grand diamètre.

La queue 21 et, partiellement, la collerette 22 sont traversées axialement par un alésage 23 qui débouche axialement dans un autre alésage 24, dont le diamètre est légèrement plus grand que celui de l'alésage 23, et qui débouche à l'extérieur par une partie tronconique formant siège 25.

La collerette 22 est traversée radialement par un ajutage 26 faisant communiquer ledit autre alésage 24 avec l'extérieur.

Le bouchon 20 est traversé par un poussoir 30.

Plus précisément, le poussoir 30 comporte une tige 31 cylindrique montée coulissante dans l'alésage 23 du bouchon 20, un joint torique 32 étant prévu pour assurer l'étanchéité du coulissement ; la tige 31 traverse, avec un jeu radial, l'autre alésage 24 du bouchon 20 et se prolonge selon un collet 33 de diamètre plus grand que celui de la tige 31 ; le poussoir porte au delà du collet 33 une aiguille 34 s'étendant axialement.

A la racine du collet 33, la tige 31 présente une gorge semi-torique 35 adaptée à recevoir un joint torique 36 destiné à coopérer à étanchéité avec le siège 25 bordant l'autre alésage 24 du bouchon 20 ; un ressort hélicoïdal 37 entoure l'aiguille 34 et prend appui, d'un côté, sur le poussoir 30 et, de l'autre côté, sur la cloison transversale 16 du corps 10, cloison qui présente une ouverture 18 traversée à jeu par l'aiguille 34 ; le ressort 37 applique en permanence le joint torique 36 en direction du siège 25 ; les dimensions du poussoir 30 sont telles que, dans la position où le joint 36 est appliqué sur son siège 25, l'aiguille 34 s'étend à travers l'ouverture 18 qu'elle dépasse légèrement axialement et la tige 31 sort à l'extérieur de l'alésage 23.

Du côté de la cloison 16 opposé au poussoir 30, le corps 10 présente une paroi cylindrique 19 définissant une cavité 28 ouverte vers l'extérieur dont le fond est constitué par la cloison transversale 16 et dont la face interne cylindrique, d'axe 13, est de plus grand diamètre que celui de l'alésage 15.

La cavité 28 est adaptée à recevoir un joint dit joint de valve 40 représenté seul sur la figure 6.

Le joint de valve 40 est constitué de deux parties de révolution coaxiales, une partie intérieure 41 et une partie extérieure 42 raccordées à l'une de leur extrémité par une partie annulaire transversale 43 ; du côté opposé à celui où elle se raccorde à la partie extérieure 42, la partie intérieure 41 présente un rebord annulaire 44 dirigé vers l'intérieur définissant un passage central 45.

Le diamètre extérieur de la partie extérieure 42 du joint de valve 40 correspond au diamètre intérieur de la cavité 28 destinée à le recevoir ; lorsque le joint de valve 40 est mis en place dans la cavité 28, son rebord annulaire est plaqué contre la cloison transversale 16, l'ouverture 45 qu'il définit entourant l'ouverture 18 de la cloison transversale 16.

Le joint de valve 40 est maintenu en place dans la cavité 28 grâce à un couvercle 46 vissé sur la face extérieure de la paroi cylindrique 19 qui prend appui sur la paroi annulaire transversale 43 du joint de valve 40, par son fond 47 qu'il présente, lequel fond 47 est muni d'un passage 48 pour la valve du pneumatique à gonfler, comme décrit ci-dessous.

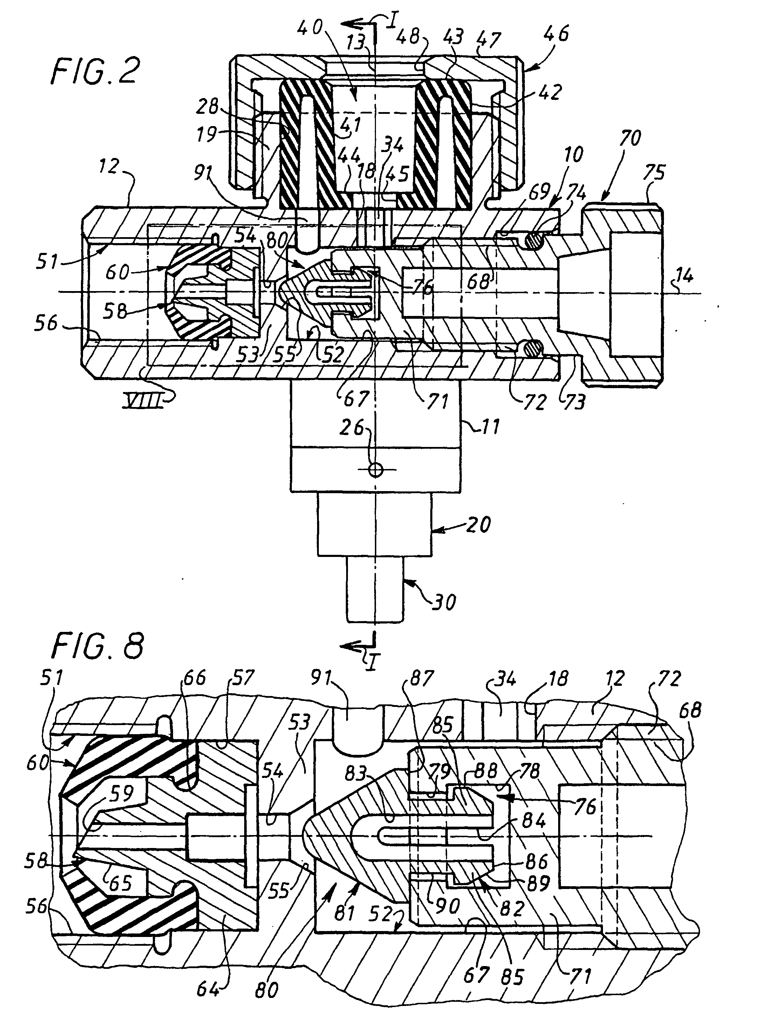

La deuxième partie 12, figure 2, d'axe 14 du corps 10 comprend, figure 2, un alésage dit d'alimentation 51 et un alésage dit de distribution 52, séparés tous deux par une cloison de séparation 53 percée d'un trou cylindrique axial 54 débouchant dans l'alésage de distribution 52 selon une portée tronconique 55.

L'alésage 51 comprend une première partie 56 débouchant à l'extérieur et filetée intérieurement, suivie d'une deuxième partie 57 bordée axialement par la cloison de séparation 53 et de diamètre inférieur à celui de la première partie 56.

La deuxième partie 57 est adaptée à recevoir de manière centrée un perforateur 58 traversé par un canal axial 59.

Un joint dit d'alimentation 60 est associé au perforateur 58.

Le joint d'alimentation 60 est montré seul sur la figure 5 ; il comprend une jupe cylindrique 61 prolongée, d'un côté, par un rebord annulaire 62 et, de l'autre côté, par une lèvre tronconique 63 orientée vers l'axe de la jupe cylindrique 61 ; la section de la lèvre tronconique 63 décroît légèrement depuis la jupe cylindrique 61 vers son extrémité proche de l'axe.

Le perforateur 58 comprend, figure 8, un socle 64 surmonté d'une aiguille creuse 65 ; une gorge 66 ménagée à la périphérie du perforateur 58 est destinée à recevoir le rebord annulaire 62 du joint d'alimentation 60 pour montage de celui-ci sur le perforateur 58 ; lorsque le perforateur 58, équipé du joint d'alimentation 60, est monté dans la deuxième partie 12 du corps 10, le socle 64 est dans la deuxième partie 57 de l'alésage d'alimentation 51, en appui contre la cloison de séparation 53, tandis que le joint d'alimentation 60 s'étend axialement partiellement dans les première 56 et deuxième 57 parties dudit alésage 51, l'aiguille creuse 65 étant située entièrement à l'intérieur du joint d'alimentation 60 qui l'entoure.

L'alésage de distribution 52, qui s'étend au delà de la cloison de séparation 53 par rapport à l'alésage d'alimentation 51, comprend trois étages dont les diamètres croissent depuis la cloison de séparation 53 vers l'extérieur.

Le premier étage 67 et le troisième étage 69 sont lisses intérieurement, tandis que le deuxième étage 68 intermédiaire est fileté intérieurement.

L'alésage de distribution 52 est adapté à recevoir un distributeur 70 qui comprend une zone cylindrique avant 71, une zone filetée extérieurement 72 et une zone cylindrique arrière 73 les zones cylindriques avant 71 et arrière 73 sont adaptées à coulisser à l'intérieur des premier et troisième étages, 67 et 69, de l'alésage de distribution 52 ; la zone filetée extérieurement 72 est adaptée à coopérer avec le deuxième étage 68, fileté intérieurement, dudit alésage de distribution 52. La zone cylindrique arrière 73 présente une gorge recevant un joint torique 74 assurant l'étanchéité entre le corps 10 et le distributeur 70 qui présente par ailleurs, en prolongement de ladite zone cylindrique arrière 73, un bouton de préhension 75 permettant la manoeuvre du distributeur 70 en vissage et dévissage relativement au corps 10.

Du côté opposé au bouton de préhension 75, le distributeur 70 porte un clapet 80.

Plus précisément, au droit de la zone cylindrique avant 71, le distributeur 70 présente une creusure 76 débouchant à l'extérieur et dont la section par un plan passant par l'axe du distributeur 70 est en forme générale de T en sorte que sont définies deux demi-creusures adjacentes, l'une 78 interne, l'autre 79 externe, la demi-creusure externe 79, qui débouche vers l'extérieur, étant de diamètre inférieur à celui de la partie cylindrique de la demi-creusure interne 78 qui, dans le mode de réalisation représenté, a été réalisée en évidant latéralement la zone cylindrique avant 71 du distributeur 70.

Le clapet 80 présente, figure 8, une tête 81 de forme générale conique adaptée à coopérer à étanchéité avec la portée tronconique 55 qui borde le trou axial 54 de la cloison de séparation 53 de la deuxième partie 12 du corps 10.

La tête 81 est portée par une queue 82 de forme générale cylindrique de diamètre inférieur au plus grand diamètre de la tête 81 un trou borgne 83 axial est ménagé dans la queue 82 et s'étend partiellement dans la tête 81 ; une saignée diamétrale 84 est pratiquée dans la queue 82 et partiellement dans la tête 81 : la largeur et la longueur de la saignée 84 sont légèrement inférieures à, respectivement, le diamètre et la longueur du trou borgne 83. Grâce à cette disposition, la queue 82 est constituée de deux pattes élastiques 85 symétriques par rapport au plan médian passant par l'axe du trou borgne 83 et parallèle aux flancs de la saignée 84.

Chaque patte 85, de forme semi-cylindrique, est définie entre une face plane transversale d'extrémité 86 et la face 87 de la base de la tête 81 ; la face externe semi-cylindrique 88 de chaque patte 85 est raccordée à la face plane d'extrémité 86 par une face semi-tronconique 89 ; entre la face externe 88 et la face 87, chaque patte 85 présente une gorge 90 semi-cylindrique dont le diamètre en fond de gorge est légèrement inférieur au diamètre de la demi-creusure externe 79 du distributeur 70, lequel diamètre est lui-même légèrement inférieur au diamètre de la face externe semi-cylindrique 88 de la patte 85 ; par ailleurs, la longueur axiale de ladite gorge 90 est légèrement supérieure à la longueur axiale de ladite demi-creusure externe 79.

La queue 82 du clapet 80 est introduite dans la creusure 76 du distributeur 70 : l'introduction est facilitée par les faces semi-tronconiques 89 des pattes 85 et le clapet 80 est donc monté par encliquetage à l'extrémité du distributeur 70 grâce aux dimensions relatives évoquées ci-dessus, on voit que le clapet 80 est monté avec un jeu tant axial que radial par rapport au distributeur 70.

Comme cela est visible sur les figures 1, 2 et 7, un passage 91 est percé dans le fond de la cavité 28 du corps 10 ; ce passage 91, dont le rôle apparaîtra ci-dessous, fait communiquer l'alésage de distribution 52 avec la cavité 28 ; le passage 91 débouche dans ladite cavité 28, qui reçoit le joint de valve 40, dans l'espace situé entre les parties intérieure 41 et extérieure 42 dudit joint de valve 40.

Le fonctionnement du dispositif de gonflage qui vient d'être décrit est le suivant.

Dans un premier temps, l'usager s'assure de la fermeture du trou axial 54 par le clapet 80, en tournant, si besoin est, le bouton de préhension 75 du distributeur 70 ; grâce au montage avec jeu, tant axial que radial, du clapet 80, par rapport au distributeur 70, on est sûr que la tête 81 du clapet 80 s'ajustera exactement sur la portée tronconique 55, sans qu'il soit nécessaire de réaliser les pièces concernées avec grande précision, notamment quant à leur concentricité.

Dans un deuxième temps, l'usager équipe le dispositif d'une bouteille de gaz comprimé, tel que par exemple du dioxyde de carbone.

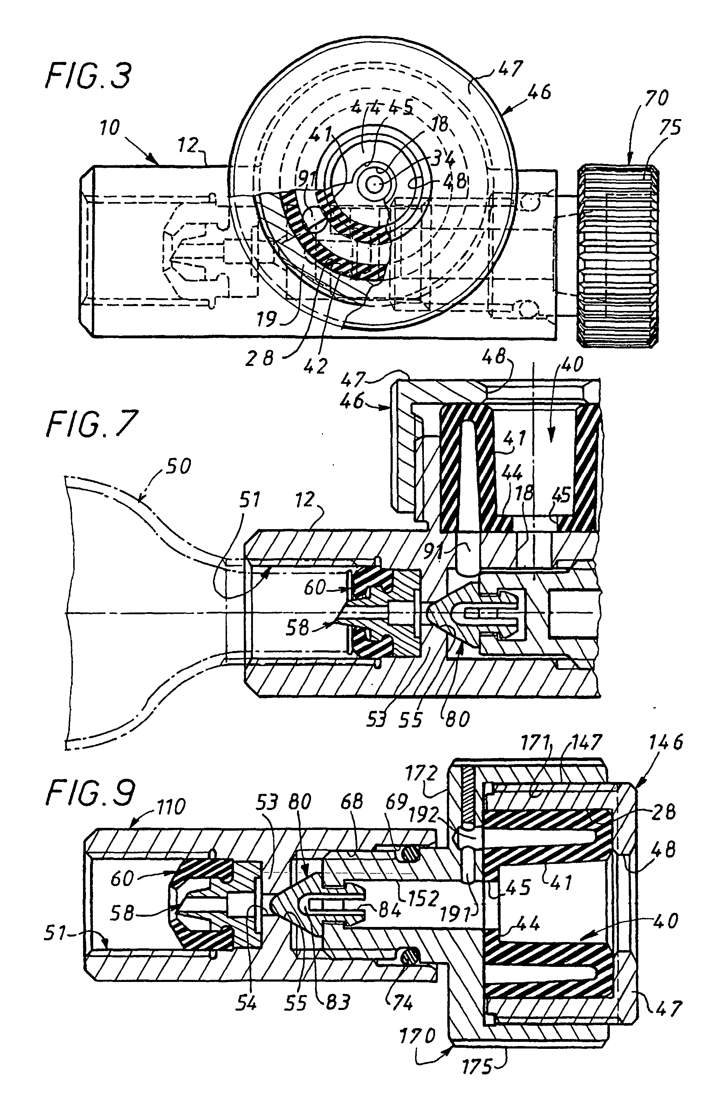

Cette bouteille, montrée partiellement en traits mixtes sur la figure 7 et référencée 50, est vissée par son goulot fileté dans l'alésage d'alimentation 51. La capsule qui la ferme arrive au contact de l'aiguille creuse 65 du perforateur 58 qui, le vissage de la bouteille étant poursuivi, perfore légèrement la capsule ; dès lors, le canal axial 59 est en communication, en amont du clapet 80, avec l'intérieur sous pression de la bouteille 50, et est donc également sous pression. Le perforateur 58, grâce à son montage coulissant à étanchéité dans la deuxième partie 57 de l'alésage d'alimentation 51, se comporte alors à la manière d'un piston et est propulsé vers la capsule de la bouteille qu'il perfore complètement. Parallèlement, ladite capsule comprime la lèvre tronconique 63 et la jupe cylindrique 61 du joint d'alimentation 60 qui s'expansent radialement, assurant ainsi une parfaite étanchéité entre la deuxième partie 12 du corps 10, le perforateur 58 et la bouteille 50, ceci grâce à la forme particulière du joint d'alimentation 60, comme visible sur la figure 7.

Ainsi, on appréciera l'aide à la percussion apportée par le perforateur 58 lui-même ; sur les figures, le perforateur 58 a été représenté, pour des raisons de simplification, en contact avec la paroi de séparation 53 mais, en fonction des circonstances et notamment compte tenu de ce qui précède, il pourrait être à légère distance de celle-ci.

Le dispositif de gonflage est maintenant opérationnel.

Dans un troisième temps, l'usager coiffe la valve du pneumatique à gonfler à l'aide du dispositif, en introduisant celle-ci à travers le passage 48 du couvercle 46 du dispositif jusqu'à ce qu'elle vienne en butée sur le rebord annulaire 44 du joint de valve 40 ; dans cette position de la valve, sa tige de commande est dans l'axe de l'aiguille 34 du poussoir 30 tout en étant à légère distance de celle-ci.

Les dimensions de la partie intérieure 41 du joint de valve 40, relativement au diamètre extérieur de la valve du pneumatique, sont telles qu'une certaine fixation par serrage élastique du dispositif de gonflage sur la valve du pneumatique est assurée.

Dans un quatrième temps, l'usager dévisse légèrement le distributeur 70, éloignant ainsi le clapet 80 de son siège 55. Le gaz comprimé envahit le premier étage 67 de l'alésage de distribution 52, traverse, d'une part, le jeu radial existant entre ce premier étage 67 et la zone cylindrique avant 71 du distributeur 70 et, d'autre part, l'ouverture 18 ménagée dans la cloison transversale 16, puis ouvre la valve du pneumatique qu'il met sous pression.

Parallèlement, le gaz sous pression, grâce au passage 91, met en pression l'espace compris entre les parties intérieure 41 et extérieure 42 du joint de valve 40, plaquant ainsi, d'une part, la partie intérieure 41 contre le corps de la valve du pneumatique et, d'autre part, la partie extérieure 42 contre la paroi cylindrique 19 de la deuxième partie 12 du corps 10 ; grâce à cette disposition, une étanchéité parfaite est assurée entre la valve du pneumatique et le corps 10.

Bien entendu, la pression du gaz introduit dans le pneumatique peut être choisie en agissant sur le distributeur 70, cette action faisant varier la perte de charge à travers l'espace compris entre le clapet 80 et la portée tronconique 55 ; cette pression peut, si désiré, être connue ; il suffit pour cela, après avoir fermé le trou axial 54 par vissage du distributeur 70, de brancher au droit de l'ajutage 26 de la première partie 11 du corps 10 un manomètre et de pousser, contre le ressort 37, le poussoir 30 : le joint torique 36 s'écarte de son siège 25 et l'aiguille 34 ouvre la valve du pneumatique, mettant l'intérieur de celui-ci en communication avec le manomètre.

Bien entendu, comme on le comprendra aisément, la lecture d'un manomètre peut également être effectuée pendant l'opération de gonflage proprement dite.

Si un manomètre n'est pas branché sur le dispositif de gonflage, il est possible également, par action sur le poussoir 30, de décompresser le pneumatique, si par exemple sa pression est jugée excessive ; cette action met en effet l'intérieur de celui-ci en communication avec l'extérieur, via l'ajutage 26.

On appréciera le faible encombrement du dispositif de gonflage qui vient d'être décrit et sa simplicité de mise en oeuvre laquelle se fait par ailleurs sans effort notable pour l'usager. Grâce aux dispositions qu'il comporte, les pièces qui le constituent peuvent être moulées, en matière plastique ou alliage léger ; son encombrement et son poids sont faibles, en sorte qu'il est transportable aisément, dans une poche par exemple.

Dans la mesure où l'on ne souhaite pas bénéficier des dispositions permettant d'utiliser un manomètre et/ou de décompresser le pneumatique, le dispositif de gonflage peut être simplifié et donc sa taille et son poids encore réduits.

Une variante simplifiée est montrée sur la figure 9. Sur cette figure, les éléments identiques à ceux de la variante précédente, ou jouant le même rôle, portent les mêmes références.

Selon cette variante, les caractéristiques essentielles du dispositif selon l'invention sont conservées, notamment le joint 40, ainsi que son montage.

Ici, le corps 110 du dispositif ne comprend qu'une seule partie, globalement analogue à la deuxième partie 12 du corps 10 de la variante précédente. Le distributeur 170 présente un bouton de préhension 175 creux comportant un fond 172 et un alésage interne 171 fileté intérieurement recevant un couvercle 146 dont la face cylindrique extérieure 147 est filetée et coopère en vissage et dévissage avec l'alésage interne 171 du distributeur 170 ; le couvercle 146 reçoit intérieurement le joint de valve 40 de la même manière que le couvercle 46 de la variante précédente. Ici, le distributeur 170 porte, en aval du clapet 80, l'alésage de distribution 152 qui débouche à travers le fond 172 au droit du passage central 45 du joint de valve 40.

L'alésage de distribution 152 communique avec l'espace compris entre les parties intérieure et extérieure du joint de valve 40, ici par un perçage radial 191 débouchant dans un trou borgne 192, s'étendant parallèlement à l'axe du dispositif, prévu dans le fond 172 du bouton 175 du distributeur 170.

Le fonctionnement de cette variante est identique à celui de la variante précédente. Notons qu'ici, après léger dévissage du distributeur 170, le gaz sous pression contenu dans la bouteille vissée en 51 rejoint l'alésage de distribution 152 en traversant la saignée diamétrale 84 du clapet 80.

## Revendications

1. Dispositif de gonflage mettant en oeuvre une bouteille ou cartouche de gaz comprimé, pour le gonflage d'un pneumatique ou analogue muni d'une valve de gonflage, comportant un alésage d'alimentation (51) fileté intérieurement destiné à recevoir par vissage le goulot de ladite bouteille ou cartouche fermé par une capsule, et au fond duquel est prévu un perforateur (58) entouré d'un joint (60) dit d'alimentation, ledit alésage d'alimentation (51) communiquant par un trou axial (54) avec un alésage de distribution (52, 152), ladite communication étant contrôlée par un clapet (80) commandé porté par un distributeur (70, 170) déplaçable axialement, ledit dispositif comportant également une cavité (28) destinée à recevoir à étanchéité la valve de gonflage du pneumatique ou analogue et communiquant avec l'alésage de distribution (52, 152), dispositif dans lequel ladite étanchéité est assurée par un joint (40) dit de valve, placé dans ladite cavité (28) dans laquelle il est maintenu par un couvercle (46) muni d'un passage (48) pour la valve de pneumatique ou analogue, **caractérisé par le fait que** le joint de valve (40) est constitué de deux parties de révolution coaxiales (41, 42), une partie intérieure (41) et une partie extérieure (42), raccordées par une partie annulaire transversale (43) tournée vers l'extérieur, un passage (91, 191-192) étant prévu pour mettre en communication l'alésage de distribution (52, 152) et l'espace compris entre les deux parties de révolution coaxiales (41, 42) dudit joint de valve (40), en vue de plaquer, d'une part, la partie intérieure (41) contre le corps de la valve du pneumatique et, d'autre part, la partie extérieure (42) contre la paroi intérieure de la cavité (28), en assurant ainsi une étanchéité parfaite entre la valve du pneumatique et le dispositif.

2. Dispositif de gonflage selon la revendication 1, **caractérisé par le fait que** ladite partie intérieure (41) du joint de valve (40) présente un rebord annulaire (44) dirigé vers l'intérieur et définissant un passage central (45) par lequel ladite cavité (28) et l'alésage de distribution (52, 152) communiquent.

3. Dispositif de gonflage selon l'une des revendications 1 ou 2, **caractérisé par le fait que** le joint d'alimentation (60) comprend une jupe cylindrique (61) prolongée, d'un côté, par un rebord annulaire (62) et, de l'autre côté, par une lèvre tronconique (63) orientée vers l'axe de la jupe cylindrique (61).

4. Dispositif de gonflage selon l'une des revendications 1 à 3, **caractérisé par le fait que** la section de la lèvre tronconique (63) décroît légèrement depuis la jupe cylindrique (61) vers son extrémité proche de l'axe.

5. Dispositif de gonflage selon l'une des revendications 1 à 4, **caractérisé par le fait que** le perforateur (58) comprend un socle (64) surmonté d'une aiguille creuse (65), une gorge (66) ménagée à la périphérie du perforateur (58) étant prévue pour recevoir le rebord annulaire (62) du joint d'alimentation (60).

6. Dispositif de gonflage selon la revendication 5, **caractérisé par le fait que** l'aiguille creuse (65) est située entièrement à l'intérieur du joint d'alimentation (60) qui l'entoure.

7. Dispositif de gonflage selon l'une des revendications 1 à 6, **caractérisé par le fait que** le clapet (80) présente une tête (81) de forme générale conique adaptée à coopérer à étanchéité avec une portée tronconique (55) qui borde un trou axial (54) traversant une cloison de séparation (53) séparant l'alésage d'alimentation (51) et l'alésage de distribution (52, 152).

8. Dispositif de gonflage selon la revendication 7, **caractérisé par le fait que** la tête (81) du clapet (80) est portée par une queue (82) dans laquelle est ménagé un trou borgne (83) axial et une saignée diamétrale (84) en sorte que sont réalisées deux pattes élastiques (85) munies chacune d'une gorge (90) semi-cylindrique pour la fixation par encliquetage du clapet (80) en bout du distributeur (70, 170).

9. Dispositif de gonflage selon la revendication 8, **caractérisé par le fait que** le montage par encliquetage du clapet (80) en bout du distributeur (70, 170) est réalisé avec un jeu tant axial que radial.

10. Dispositif de gonflage selon l'une des revendications 1 à 9, **caractérisé par le fait que** ledit dispositif comporte un corps (110) supportant le joint d'alimentation (60) et le distributeur (170), lequel distributeur (170) qui porte le clapet (80) porte également le joint de valve (40), le joint d'alimentation (60), le clapet (80) et le joint de valve (40) étant alignés selon l'axe du corps (110).

11. Dispositif de gonflage selon l'une des revendications 1 à 9, **caractérisé par le fait que** ledit dispositif comporte un corps (10) en deux parties (11, 12), une première partie (11) supportant selon un axe (13) le joint de valve (40) et une deuxième partie (12) supportant selon un axe (14) le joint d'alimentation (60) et le distributeur (70), lesdits axes (13, 14) faisant un angle entre eux.

12. Dispositif de gonflage selon la revendication 11, **caractérisé par le fait que** lesdits axes (13, 14) sont orthogonaux.

13. Dispositif de gonflage selon l'une des revendications 1 ou 12, **caractérisé par le fait que** lesdits axes (13, 14) ne sont pas coplanaires, la première partie (11) du corps (10) portant un poussoir (30), s'étendant selon son axe (13), pour mettre en communication, à volonté, l'alésage de distribution (52) avec l'extérieur et/ou un manomètre.

14. Dispositif de gonflage selon l'une des revendications 11 à 13, **caractérisé par le fait que** le perforateur (58) est monté coulissant dans le corps (10, 110).

## Patentansprüche

1. Aufpumpeinrichtung, die eine Druckgasflasche oder Druckgaskartusche verwendet, für das Aufpumpen bzw. Aufblasen eines Luftreifens oder dgl., der mit einem Aufpumpventil versehen ist, umfassend eine Zufuhrbohrung (51) mit Innengewinde, die dazu bestimmt ist, durch Verschraubung den Hals der Flasche oder Kartusche, die durch eine Kapsel verschlossen ist, aufzunehmen und an deren Boden bzw. Ende eine Perforiervorrichtung (58), die durch eine sogenannte Zufuhrverbindung bzw. -dichtung (60) umgeben ist, vorgesehen ist, wobei die Zufuhrbohrung (51) durch ein axiales Loch (54) mit einer Verteilerbohrung (52, 152) in Verbindung steht, wobei die Verbindung durch eine Verschlußklappe (80), die durch einen axial verlagerbaren Verteiler (70, 170) getragen ist, gesteuert bzw. geregelt ist, wobei die Vorrichtung in gleicher Weise eine Ausnehmung bzw. einen Hohlraum (28) aufweist, die dazu bestimmt ist, dicht bzw. dichtend das Aufpumpventil des Luftreifens oder dgl. aufzunehmen, und mit der Verteilerbohrung (52, 152) wechselwirkt bzw. in Verbindung steht, wobei die Vorrichtung, in welcher diese Dichtheit durch eine Ventilverbindung bzw. dichtung (40), sichergestellt ist, in der Ausnehmung bzw. dem Hohlraum (28) angeordnet ist, in welcher(m) sie durch einen Deckel (46), der mit einem Durchgang bzw. -tritt (48) für das Ventil des Luftreifens oder dgl. versehen ist, gehalten ist, **dadurch gekennzeichnet, daß** die Ventilverbindung (40) aus zwei koaxialen Rotationsteilen (41, 42), einem Innenteil (41) und einem Außenteil (42) besteht, die durch einen ringförmigen Querteil (43), der nach außen gerichtet ist, verbunden sind, wobei ein Durchgang (91, 191-192) vorgesehen ist, um die Verteilerbohrung (52, 152) und den Raum, der zwischen den zwei koaxialen Rotationsteilen (41, 42) der Ventilverbindung (40) vorgesehen ist, in Verbindung zu bringen, um einerseits den Innenteil (41) gegen den Ventilkörper des Luftreifens und andererseits den Außenteil (42) gegen die Innenwand der Ausnehmung (28) zu drücken bzw. in Anlage zu bringen, um so eine perfekte Dichtheit zwischen dem Ventil des Luftreifens und der Vorrichtung sicherzustellen.

2. Aufpumpeinrichtung nach Anspruch 1, **dadurch gekennzeichnet, daß** der Innenteil (41) der Ventilverbindung (40) eine ringförmige Randleiste bzw. Bördelung bzw. Umschlag (44) aufweist, die nach innen gerichtet ist und einen zentralen Durchgang (45) definiert, durch welchen die Ausnehmung (28) und die Verteilerbohrung (52, 152) kommunizieren bzw. in Verbindung stehen.

3. Aufpumpeinrichtung nach einem der Ansprüche 1 oder 2, **dadurch gekennzeichnet, daß** die Zufuhrverbindung (60) eine zylindrische Schürze (61) umfaßt, die an einer Seite durch eine ringförmigen Randleiste bzw. Bördelung bzw. Umschlag (62) und an der anderen Seite durch eine kegelstumpfförmige Lippe (63), die zu der Achse der zylindrischen Schürze (61) gerichtet ist, verlängert ist.

4. Aufpumpeinrichtung nach einem der Ansprüche 1 bis 3, **dadurch gekennzeichnet, daß** der Querschnitt der kegelstumpfförmigen Lippe (63) sich geringfügig von der zylindrischen Schürze (61) weg zu ihrem der Achse nahen Ende verringert.

5. Aufpumpeinrichtung nach einem der Ansprüche 1 bis 4, **dadurch gekennzeichnet, daß** die Perforiereinrichtung (58) einen Sockel (64) umfaßt, der von einer hohlen Spitze bzw. Nadel (65) überragt ist, wobei eine Rille bzw. Vertiefung (66), die an dem Umfang der Perforiereinrichtung (58)ausgebildet ist, vorgesehen ist, um die ringförmige Randleiste bzw. Bördelung bzw. Umschlag (62) der Zufuhrverbindung (60) aufzunehmen.

6. Aufpumpeinrichtung nach Anspruch 5, **dadurch gekennzeichnet, daß** die hohle Spitze (65) vollständig im Inneren der Zufuhrverbindung (60), die sie umgibt, angeordnet ist.

7. Aufpumpeinrichtung nach einem der Ansprüche 1 bis 6, **dadurch gekennzeichnet, daß** die Klappe (80) einen Kopf (81) mit allgemein konischer Form aufweist, der adaptiert ist, um dicht mit einer kegelstumpfförmigen Auflagefläche (55) wechselzuwirken, welche ein axiales Loch (54) umgibt, das eine Trennwand (53), die die Zufuhrbohrung (51) und die Verteilerbohrung (52, 152) trennt, durchquert.

8. Aufpumpeinrichtung nach Anspruch 7, **dadurch gekennzeichnet, daß** der Kopf (81) der Klappe (80) durch einen Stiel bzw. Stab (82) getragen ist, in welchem ein axiales Sack- bzw. Blindloch (83) und ein diametraler Einschnitt (84) derart ausgebildet sind, daß zwei elastische Laschen bzw. Krempen bzw. Schlaufen (85) realisiert sind, die jeweils mit einer halbzylindrischen Rille (90) für die Festlegung durch Einklipsen der Klappe (80) am Boden bzw. Ende der Verteilereinrichtung (70, 170) versehen sind.

9. Aufpumpeinrichtung nach Anspruch 8, **dadurch gekennzeichnet, daß** die Festlegung durch Einklipsen der Klappe (80) am Boden bzw. Ende der Verteilereinrichtung (70, 170) mit einem Spiel sowohl in axialer als auch radialer Richtung realisiert ist.

10. Aufpumpeinrichtung nach einem der Ansprüche 1 bis 9, **dadurch gekennzeichnet, daß** die Vorrichtung einen Körper (110) umfaßt, der die Zufuhrverbindung (60) und die Verteilereinrichtung (170) unterstützt, wobei die Verteilereinrichtung (170), die die Klappe (80) trägt, auch die Ventilverbindung (40) trägt, wobei die Zufuhrverbindung (60), die Klappe (80) und die Ventilverbindung (40) entlang der Achse des Körpers (110) ausgerichtet sind.

11. Aufpumpeinrichtung nach einem der Ansprüche 1 bis 9, **dadurch gekennzeichnet, daß** die Vorrichtung einen Körper (10) in zwei Teilen (11, 12) umfaßt, wobei ein erster Teil (11) entsprechend einer Achse (13) die Ventilverbindung (40) unterstützt und ein zweiter Teil (12) entsprechend einer Achse (14) die Zufuhrverbindung (60) und die Verteilereinrichtung (70) unterstützt, wobei die Achsen (13, 14) miteinander einen Winkel einschließen.

12. Aufpumpeinrichtung nach Anspruch 11, **dadurch gekennzeichnet, daß** die Achsen (13, 14) orthogonal sind.

13. Aufpumpeinrichtung nach Anspruch 11 oder 12, **dadurch gekennzeichnet, daß** die Achsen (13, 14) nicht koplanar sind, wobei der erste Teil (11) des Körpers (10), der eine Druckvorrichtung (30) trägt, sich entlang seiner Achse (13) erstreckt, um nach Belieben die Verteilerbohrung (52) mit dem Äußeren und/oder einem Manometer in Verbindung zu bringen.

14. Aufpumpeinrichtung nach einem der Ansprüche 11 bis 13, **dadurch gekennzeichnet, daß** die Perforiereinrichtung (58) gleitend in dem Körper (10, 110) angeordnet bzw. festgelegt ist.

## Claims

1. An inflator device using a compressed gas cylinder or cartridge for inflating a tyre or the like having an inflator valve, said device including an internally screwthreaded supply bore (51) adapted to have the neck of said cylinder or cartridge closed by a capsule screwed into it and at the bottom of which is provided a perforator (58) surrounded by a supply seal (60), said supply bore (51) communicating via an axial hole (54) with a distribution bore (52, 152), said communication being controlled by a selectively operated valve (80) carried by a distributor (70, 170) moveable axially, said device further including a cavity (28) adapted to receive in sealed fashion the inflator valve of the tyre or the like and communicating with the distribution bore (52, 152), in which device said seal is ensured by a valve seal (40) placed in said cavity (28) in which it is held by a cap (46) provided with a passage (48) for the valve of the tyre or the like, **characterized in that** the valve seal (40) consists of two coaxial circular section parts (41, 42), namely an inner part (41) and an outer part (42), connected by an outwardly facing transverse annular part (43), a passage (91, 191-192) being provided for communication between the distribution bore (52, 152) and the space between the two coaxial circular sections (41, 42) of said valve seal (40), in order to press, on the one hand, the inner part (42) against the body of the valve of the tyre and, on the other hand, the outer part (42) against the inside wall of the cavity (28), thereby providing a perfect seal between the valve of the tyre and the device.

2. An inflator device according to claim 1 **characterized in that** said inside part (41) of the valve seal (40) has an annular rim (44) directed inwards and defining a central passage (45) through which said cavity (28) and the distribution bore (52, 152) communicate.

3. An inflator device according to either claim 1 or claim 2 **characterized in that** the supply seal (60) comprises a cylindrical skirt (61) extended at one end by an annular rim (62) and at the other end by a frustoconical lip (63) oriented towards the axis of the cylindrical skirt (61).

4. An inflator device according to any of claims 1 to 3 **characterized in that** the section of the frustoconical lip (63) decreases slightly from the cylindrical skirt (61) towards its end near the axis.

5. An inflator device according to any of claims 1 to 4 **characterized in that** the perforator (58) has a base (64) on top of which is a hollow needle (65) and a groove (66) at the periphery of the perforator (58) is provided to receive the annular rim (62) of the supply seal (60).

6. An inflator device according to claim 5 **characterized in that** the hollow needle (65) is entirely inside the supply seal (60), which surrounds it.

7. An inflator device according to any of claims 1 to 6 **characterized in that** the valve (80) has a generally conical head (81) adapted to cooperate in sealed fashion with a frustoconical bearing surface (55) around an axial hole (54) through a separator partition (53) separating the supply bore (51) and the distribution bore (52, 152).

8. An inflator device according to claim 7 **characterized in that** the head (81) of the valve (80) is carried by a tailpiece (82) in which there is provided an axial blind hole (83) and a diametral slot (84) so that two elastic lugs (85) are formed each having a semicylindrical groove (90) for clipping the valve (80) to the end of the distributor (70, 170).

9. An inflator device according to claim 8 **characterized in that** the valve (80) is clipped to the end of the distributor (70, 170) with axial and radial clearance.

10. An inflator device according to any of claims 1 to 9 **characterized in that** said device includes a body (110) supporting the supply seal and the distributor (170), which distributor (170) which carries the valve (80) also carries the valve seal (40), the supply seal (60), the valve (80) and the valve seal (40) being aligned along the axis of the body (110).

11. An inflator device according to any of claims 1 to 9 **characterized in that** said device includes a body (10) in two parts (11, 12) having a first part (11) supporting the valve seal (40) along a first axis (43) and a second part (12) supporting the supply seal (60) and the distributor (70) along a second axis (14), said axes (13, 14) being at an angle to each other.

12. An inflator device according to claim 11 **characterized in that** said axes (13, 14) are orthogonal.

13. An inflator device according to either claim 11 or claim 12 **characterized in that** said axes (13, 14) are not coplanar and the first part (11) of the body (10) carries a plunger (30) extending along its axis (13) for selectively establishing communication between the distribution bore (52) and the outside and/or a pressure gauge.

14. An inflator device according to any of claims 11 to 13 **characterized in that** the perforator (58) slides in the body (10, 110).
